# EUROPEAN PATENT SPECIFICATION

(11) **EP 4 098 934 B1**
(45) Date of publication and mention of the grant of the patent: **18.02.2026**
(21) Application number: 22176767.6
(22) Date of filing: 01.06.2022
(51) Int. Cl.: F21S 9/02, F21V 33/00, B64D 25/14, H02J 50/00

(54) **ENERGY AUTONOMOUS AIRCRAFT EVACUATION SLIDE SYSTEMS AND METHODS**
ENERGIEAUTARKE FLUGZEUGENTLASTUNGSGLEITSYSTEME UND VERFAHREN
SYSTÈMES ET PROCÉDÉS DE TOBOGGAN D'ÉVACUATION D'AÉRONEF AUTONOME EN ÉNERGIE

(30) Priority: 04.06.2021 IN 202141024952; 05.04.2022 US 202217714049
(43) Date of publication of application: 07.12.2022
(73) Proprietor: Goodrich Corporation, Charlotte, NC 28217-4578 (US)
(72) Inventor: PALANIAPPAN, Elangovan, Bangalore (IN); SUBRAMANIAN, Petchi, Bangalore (IN)
(74) Representative: Dehns

(56) References cited:
- EP-A1- 3 031 728
- EP-A1- 3 780 333
- US-A1- 2011 235 328
- US-A1- 2017 050 736
- US-A1- 2017 208 890
- US-A1- 2019 150 248

## Description

### CROSS-REFERENCE TO RELATED APPLICATIONS

This application claims priority to, and the benefit of, India Provisional Patent Application No. 202141024952, filed June 4, 2021 and titled "ENERGY AUTONOMOUS AIRCRAFT EVACUATION SLIDE SYSTEMS AND METHODS."

### FIELD

The present disclosure is directed to aircraft evacuation systems and, more particularly, to lighting systems for aircraft evacuation slides.

### BACKGROUND

The requirement for reliably evacuating airline passengers in the event of an emergency is well known. A conventional method of quickly evacuating a large number of passengers from an aircraft is to provide multiple emergency exits, each of which is equipped with an inflatable emergency evacuation slide. Since not all emergencies occur during daylight or in well-lit areas, emergency evacuation slides are often equipped with lighting systems to illuminate at least a portion of the evacuation slide when it is deployed.

An evacuation slide is typically required on all commercial (passenger carrying) aircraft where the door sill height is such that, in the event of an evacuation, passengers would be unable to step down from the door uninjured (Federal Aviation Administration requires slides on all aircraft doors where the floor is 6 feet (1.8 m) or more above the ground). Per Federal Regulations, emergency slide lights must provide illumination of not less than 0.03 foot-candle (measured normal to the direction of incident light) at the ground and of the erected assist means where an evacuee would normally make first contact with the airplane in each of the attitudes corresponding to the collapse of one or more legs of the landing gear. The energy supply to each emergency lighting unit typically must provide the required level of illumination for at least 10 minutes at the critical ambient conditions after emergency landing.

Emergency lighting systems for escape slides for vehicles, primarily aircraft, typically include lighting harnesses with a plurality of electric lighting units, a battery pack, and switch mechanism automatically operated to energize lights upon deployment of the slide. The lighting harnesses may be prefabricated in one standard size adaptable for application to slides of widely varying sizes and configurations. The emergency slide is normally carried in the aircraft in a tightly folded condition with lighting units inaccessible. EP 3 780 333 A1 describes aircraft light fixture harvesting. US 2011/235328 A1 describes an energy harvester of an LED luminaire. US 2017/208890 A1 describes an energy harvesting sole. US 2019/150248 A1 describes an aircraft escape slide lighting system.

### SUMMARY

Described herein and defined in claim 1 is an aircraft evacuation system for an aircraft.

In various embodiments, the piezoelectric sensor comprises a diaphragm.

In various embodiments, the fixed portion comprises a metal plate.

In various embodiments, the movable portion comprises a piezoelectric ceramic disk.

In various embodiments, the piezoelectric sensor is configured to generate electrical energy for the light source in response to the movable portion moving with respect to the fixed portion.

In various embodiments, the piezoelectric sensor is configured to generate electrical energy based upon vibrations of the evacuation slide.

Described herein is a lighting system for use with an evacuation slide of an aircraft. The lighting system comprises a case, a printed circuit board disposed in the case, a piezoelectric sensor coupled to the case, the piezoelectric sensor comprising a fixed portion and a movable portion, and a light source in electronic communication with the piezoelectric sensor. The piezoelectric sensor and the light source are disposed on opposite sides of the printed circuit board.

In various embodiments, the piezoelectric sensor comprises a diaphragm.

In various embodiments, the fixed portion comprises a metal plate.

In various embodiments, the movable portion comprises a piezoelectric ceramic disk.

In various embodiments, the piezoelectric sensor is configured to generate electrical energy for the light source in response to the movable portion moving with respect to the fixed portion.

In various embodiments, the light source is disposed in the case.

In various embodiments, the lighting system further comprises a first capacitor configured to store electrical energy generated by the piezoelectric sensor, and a resistor configured to limit a flow of electrical current between the piezoelectric sensor and the light source.

In various embodiments, the lighting system further comprises a second capacitor configured to store electrical energy generated by the piezoelectric sensor, and a diode disposed between the first capacitor and the second capacitor.

In various embodiments, the light source comprises a light emitting diode.

In various embodiments, the case comprises a transparent material.

In various embodiments, the aircraft evacuation system further comprises a first capacitor configured to store electrical energy generated by the piezoelectric sensor, and a resistor configured to limit a flow of electrical current between the piezoelectric sensor and the light source.

In various embodiments, the aircraft evacuation system further comprises a second capacitor configured to store electrical energy generated by the piezoelectric sensor, and a diode disposed between the first capacitor and the second capacitor.

In various embodiments, the light source comprises a light emitting diode.

Described herein is a method of illuminating an aircraft evacuation slide of an aircraft evacuation system for an aircraft. The method comprises disposing lighting modules on the aircraft evacuation slide, wherein the evacuation slide is disposed at an opening in the aircraft, the evacuation slide made of flexible gastight material, and is disposable in each of a stowed configuration and deployed configuration, the lighting modules configured to provide illumination to the aircraft evacuation slide. The lighting modules are spaced apart from each other, wherein the lighting modules operate independently of each other. Each of the lighting modules include a light source configured to provide illumination to the aircraft evacuation slide, and a piezoelectric sensor operably connected to the light source and configured to generate electrical energy based upon a change in fluid pressure inside the evacuation slide.

The features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates an example of an evacuation slide on an aircraft, in accordance with various embodiments;
FIG. 2 illustrates a block diagram of a light system, in accordance with various embodiments;
FIG. 3 illustrates a section view of a light system installed on the evacuation slide of FIG. 1, in accordance with various embodiments;
FIG. 4 illustrates a piezoelectric diaphragm, in accordance with various embodiments; and
FIG. 5 illustrates a circuit diagram of a lighting module, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosure, it should be understood that other embodiments may be realized and that logical, chemical, and mechanical changes may be made without departing from the disclosure and by considering at least the features of one of the independent claims. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Emergency lighting systems for escape slides for vehicles, primarily aircraft, typically include lighting harnesses with a plurality of electric lighting units, a battery pack, and switch mechanism automatically operated to energize lights upon deployment of the slide. The lighting harnesses may be prefabricated in one standard size adaptable for application to slides of widely varying sizes and configurations. The emergency slide is normally carried in the aircraft in a tightly folded condition with lighting units inaccessible. Because of such a packing configuration, the wiring installation in the slide encounters numerous fabrication and reliability challenges. In addition, as a result of the compact packaging, damage to wiring and components is possible. Moreover, because of the packing forces and configuration, the wiring harnesses and some components for controlling the lighting under deployment conditions may be damaged. Testing the device to ensure its reliability is difficult with access to the slide and its components being limited. To further exacerbate the concerns, a deployed slide with degraded/inadequate lighting as a result faults, and is unavailable for use during an evacuation. As such, an improved scheme for lighting the evacuation slide is needed.

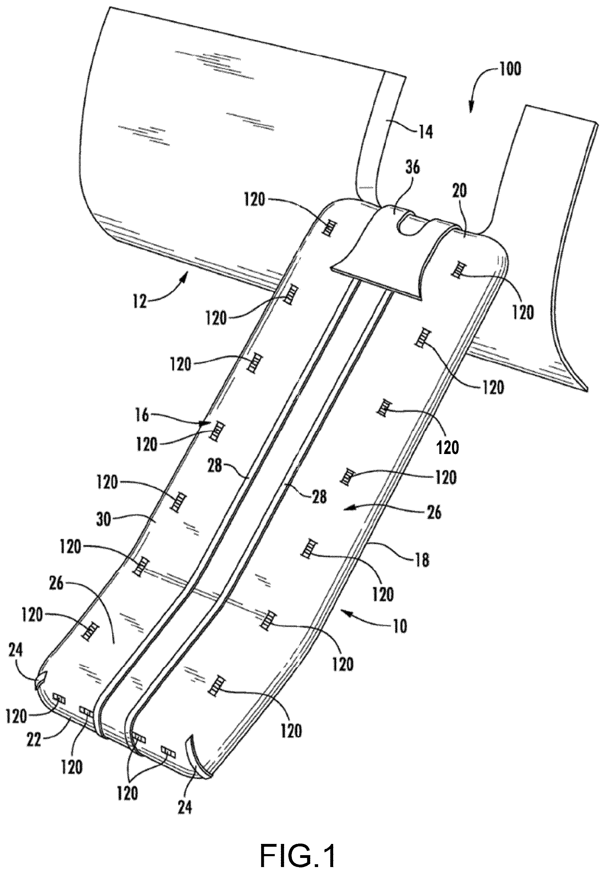

FIG. 1 depicts an evacuation slide 10 shown in a deployed condition ready for use in which occupants of an aircraft 12 escape through an opening 14. The details of construction of the slide 10 or the manner in which it is secured to the aircraft for emergency use with the opening 14 and the associated door or window (not shown) are conventional and not described further herein. The escape slide 10 as shown in FIG. 1 is illustrated in simplified and diagrammatic fashion and it is intended only to suggest a construction typical of the many types of slides, stairs and the like to which the emergency lighting system of the described embodiments may be secured. Such a typical evacuation slide 10 may be made up of one or more generally tubular inflatable bolsters of gastight material, such as rubber or plastic coated fabric, mitered together at the corners to form a generally rectangular structure when inflated. Longitudinal bolsters 16 and 18 are mitered to transverse bolsters 20 and 22 at corners indicated generally at 24. The upper surface 30 of the slide 10 comprises a sheet of fabric 26 which is firmly secured to the four bolsters 16, 18, 20, 22. The fabric 26 thus serves as the surface upon which persons slide when evacuating an aircraft 12. Usually the surface fabric 26 is provided with grounding strips 28 of electrically conductive material on or integral with the fabric 26, which extend around the lower ends of the slide 10 so as to come into contact with the ground upon deployment of the slide 10. A scuff strip may also rests upon the ground to protect the deployed slide 10 from damage. Static electrical charges built up on the body of the slide 10 or the bodies of the users of the slide 10 will be discharged to the ground through the grounding strips 28, reducing the discomfort of electrical shock and also reducing the risk of ignition of any ambient flammable liquids or gases.

The lower surfaces of the longitudinal bolsters 16, 18 also may be cross-connected by web straps (not shown) spaced along the length of the slide 10 to further stabilize slide 10 when in the deployed condition. An apron 36 may be employed and is made of flexible material and frequently serves the dual purpose of attachment to the aircraft 12 and of providing a surface which gives a reassuring continuity to the surface of the slide 10 and the interior of the aircraft 12. It will be understood that the length and width of the slides 10 will vary greatly depending upon the aircraft 12 for which they are designed and also depending upon the particular exit with which they are to cooperate. In a general sense, for use with commercial aircraft in use, the slides 10 may vary in length from a minimum of about 140" to a maximum of about 270". Obviously, as larger aircraft or aircraft of different configurations are brought into use the range of lengths of the slides 10 may be extended at both ends.

Slides 10 of the types here involved are normally carried in the aircraft or other vehicle in deflated, stowed condition adjacent the door or other opening with which they are intended for use in an emergency. A typical configuration of a stowed slide 10 requires the evacuation of enclosed air and it is folded up by trained personnel in a specific manner, an operation which, as noted above, takes a large number of man-hours to complete. The stowed slide 10 is held in a folded condition by various types of breakaway fastening devices including, in some cases a plurality of separable fasteners. A lanyard (not shown) is usually provided for initiation of inflation and deployment of the slide 10 when desired. Generally, a cylinder of highly compressed gas (not shown) is enveloped in the upper portions of the folds of the packed slide 10. The assembly may also include a pressure gauge in visible position for routine checking by inspectors. The assembly is connected by a flexible tube to the interior of the slide 10, an aspirator is associated with a gas supply tube as to admit air by injection when the highly compressed gas from cylinder enters and expands into the slide 10. In a typical installation the cylinder may contain nitrogen under a pressure of about 3,000 psi. An aspirator system may be employed to facilitate the fully inflating the deployed slide 10 such that air and nitrogen fill the inflatable bolsters 16, 18, 20, 24 and the like. Suitable relief valves are usually provided, not shown herein, to protect the structure from over inflation. During inflation the various breakaway devices mentioned above will release in proper sequence to ensure inflation of all internal regions of the slide 10 and thus the assumption of proper deployed shape as shown in FIG. 1.

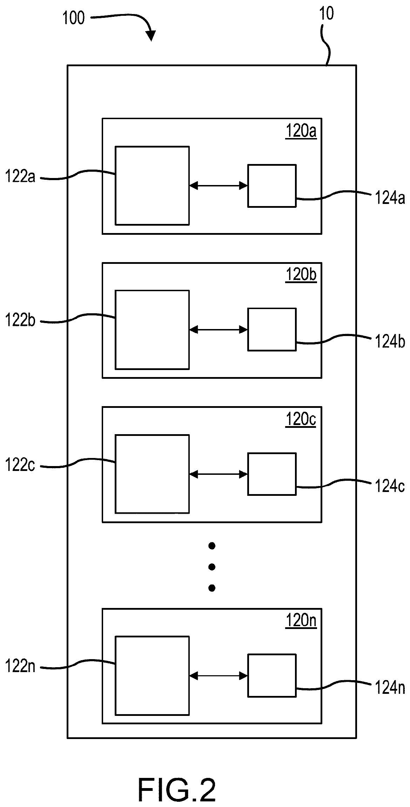

Turning now to FIG. 2 as well, slide 10 also includes a self-powered wireless lighting system shown generally as 100. Lighting system 100 includes a plurality of lighting units or modules shown generally as 120 and more specifically as 120a, 120b, 120c, ... 120n disposed on the slide 10 and distributed as needed along its length and width to provide sufficient lighting in accordance with requirements and regulations on the slide 10. In various embodiments, each of the lighting modules 120 is a standalone unit activated by vibrations and/or varying pressure forces within the slide 10 during inflation and use of the slide 10. For example, when an evacuation situation arises and the door is opened, the activation lanyard (described herein) pulls a trigger and opens the gas cylinder to activate and deploy the slide 10. In addition, pressure within slide 10 varies under the weight of the passengers as they evacuate from the airplane via slide 10. Due to this process, an energy harvesting portion of the lighting module 120 will experience vibrations and due to these vibrations, electrical energy will be continuously generated during an emergency evacuation of the aircraft.

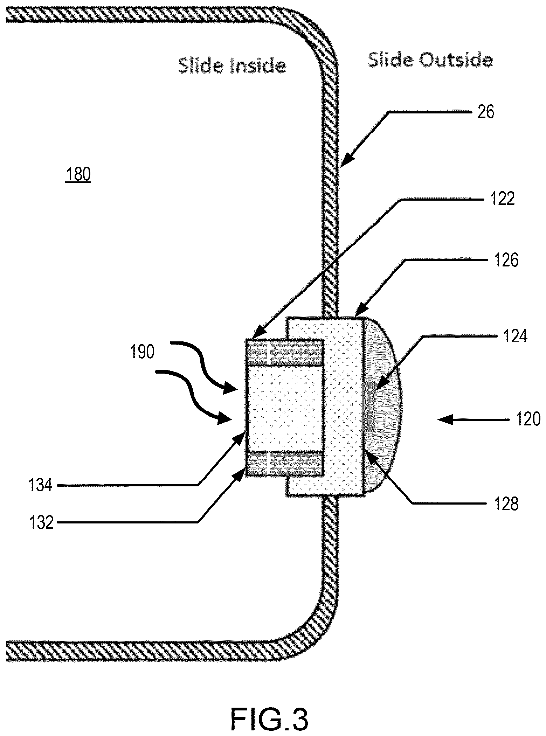

Each lighting unit 120 may include a piezoelectric sensor referred to generally as 122 and more specifically as 122a, 122b, 122c, ... 122n operably coupled to a light source referred to generally as 124 and more specifically as 124a, 124b, 124c, ... 124n. Sensor 122 is configured to generate electrical energy to power light source 124. In this regard, each sensor 122 is in electronic communication with a light source 124. In this regard, light source 124 is configured to receive electric power (e.g., electrical current and voltage) from sensor 122. More particularly, and with reference to FIG. 3, sensor 122 may comprises a non-movable part 132 (also referred to herein as a fixed portion) and a movable part 134 (also referred to herein as a movable portion) operatively coupled with the non-movable part 132. Sensor 122 may be configured to generate electrical energy in response to movable part 134 moving with respect to non-movable part 132. In various embodiments, movable part 134 moves with respect to non-movable part 132 based on changes in fluid pressure inside slide 10 and general vibrations of slide 10 under deployment and use. For example, sensor 122 will undergo multiple vibrations during the rapid release of gas into slide 10 as well as during use as passengers evacuate the aircraft with slide 10.

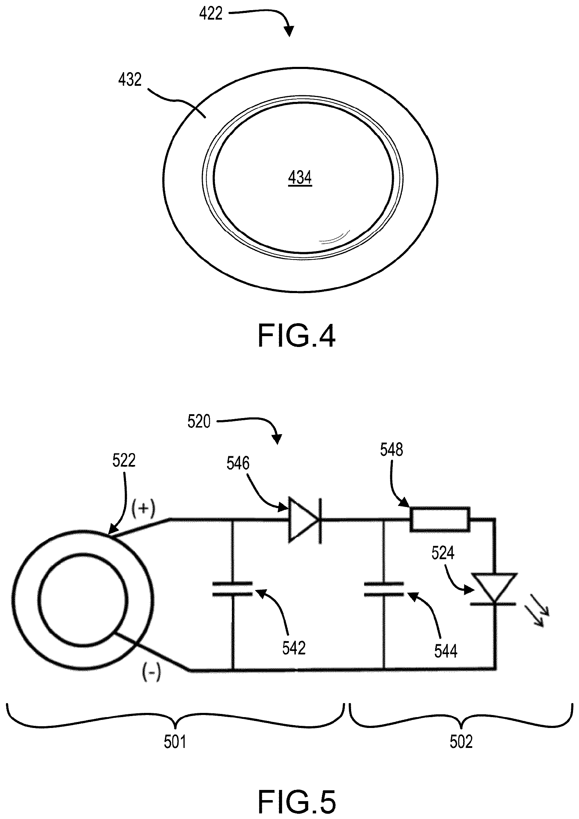

In various embodiments, and with momentary combined reference to FIG. 3 and FIG. 4, sensor 122 comprises a piezoelectric diaphragm 422 configuration, wherein movable part 134 comprises a piezoelectric ceramic disk 434 and the non-movable part 132 comprises a metal plate 432 (e.g., made of brass or nickel-alloy) adhered to the movable part 134. In this manner, sensor 122 may be configured for vibration energy harvesting.

In various embodiments, the light source 124, or more specifically 124a, 124b, 124c ... 124n, is an energy efficient LED or LED array configuration or other energy efficient light source with sufficient illumination capability that when arranged on the slide 10 satisfy the illumination regulations for the application. In various embodiments, the light source is any illumination source more efficient than incandescent bulbs. In various embodiments, the sensor 122 and light source 124 are preferably integrated into a single modular package for ease of installation in the slide 10.

With particular focus on FIG. 3, each lighting module 120 may further comprise a case 126. Case 126 may be coupled to fabric 26 such that part of the case 126 is exposed to the inner chamber 180 of slide 10 and part of the case 126 is exposed to the exterior of slide 10. Light source 124 may be housed within case 126. At least a portion of case 126 may be made of a transparent material to allow light to be transmitted from light source 124 to provide illumination to slide 10. Each lighting module 120 may further comprise a printed circuit board 128. Printed circuit board 128 may be coupled to case 126. Sensor 122 may be coupled to printed circuit board 128. Light source 124 may be coupled to printed circuit board 128. Light source 124 and sensor 122 may be on opposite sides of printed circuit board 128. In this manner, light source 124 may face outward from fabric 26 and sensor 122 may face inward (i.e., towards inner chamber 180) from fabric 26. In this manner, sensor 122 may be in fluid communication with inner chamber 180. Furthermore, in this manner, light source 124 may be configured to provide illumination to slide 10.

Fluid pressure illustrated generally by arrows 190 may act on sensor 122. In this manner, as the pressure inside chamber 180 varies, vibrational movement may be imparted onto sensor 122, causing movable part 134 to move with respect to non-movable part 132 to generate electrical energy for powering light source 124. Fluid pressure 190 may impart a force to act on sensor 122 due to gas release into chamber 180 and/or passengers using (e.g., sliding down) the slide.

With reference to FIG. 5, a block diagram of lighting module 520 is illustrated, in accordance with various embodiments. In various embodiments, lighting module 120 (see FIGs. 1 through FIG. 3) may be similar to lighting module 520. Lighting module 520 may comprise an energy harvesting portion 501 comprising piezoelectric sensor 522 and an energy utilization portion 502 comprising light source 524. In various embodiments, piezoelectric sensor 522 and light source 524 are similar to sensor 122 and light source 124, respectively, of FIGs. 1 through FIG. 3. In various embodiments, piezoelectric sensor 522 is similar to sensor 422 of FIG. 4.

Lighting module 520 may further comprise a first capacitor 542. First capacitor 542 may be part of energy harvesting portion 501. First capacitor 542 may be a super capacitor. In use, first capacitor 542 may accumulate the instantaneous energy generation from the piezoelectric sensor 522.

Lighting module 520 may further comprise a second capacitor 544. Second capacitor 544 may be part of energy utilization portion 502. Second capacitor 544 may be a storage capacitor, such as an electrolytic capacitor for example. In use, second capacitor 544 may store the harvested energy and maintain sustained energy flow to the light source 524.

Lighting module 520 may further comprise a diode 546. Diode 546 may be part of energy harvesting portion 501. Diode 546 may be a Schottky diode. Diode 546 may be disposed between first capacitor 542 and second capacitor 544. In use, diode 546 may provide reverse voltage protection.

Lighting module 520 may further comprise a resistor 548. Resistor 548 may be part of energy utilization portion 502. Resistor 548 may be used as a current limit resistor.

In view of the exacting requirements for proper folding and deployment of the slide 10 and in view of the demand for minimum space occupancy when the slide 10 is folded, it will be apparent that an emergency lighting system 100 must be so designed and installed as not to interfere with or further complicate the stowing and deploying operations and it must not significantly increase the size of the folded slide 10.

Maximum benefit from the lighting system incorporating the preferred components described above or components of equivalent or, when developed, of superior quality, and convenient testing provisions herein disclosed will be realized when piezoelectric sensors 122 and light sources 124 having long shelf-life are employed. In various embodiments, piezoelectric sensors 122 and light sources 124 with a multi-year shelf life makes it possible, in the absence of unexpected damage, deterioration or failures of the various components, to leave the slides 10 equipped with such systems in service in packed and tightly folded condition for multi-year periods (typically four years at a time) throughout the service lives of the slides 10. Since it is customary in many instances at the present time to test all slides by deployment and repacking at selected intervals, the installation of the lighting system 100 of the described embodiments will not make deployment and repacking necessary at intervals more frequent that those already established and may in fact reduce the inspection intervals.

The shape and location of the piezoelectric sensor(s) 122 and the electrical and mechanical relationship thereof with light source(s) 124 as well as the specific design thereof may be varied to meet specific desires or requirements as needed. For example, when the folding pattern for a particular evacuation slide 10 design makes it preferable to configure or locate one or more lighting module(s) of suitable shape and configuration other than that employed for others in the lighting system 100. It should also be appreciated that in some embodiments some lighting modules 120 may include a single piezoelectric sensor 122 per light source 124, while others may employ more or less than one piezoelectric sensor 122 per light source 124. Moreover, in some instances a single piezoelectric sensor 122 may be employed to control and power more than one lighting module 120, wherein wires may be coupled between adjacent lighting modules. Though such a configuration may limit flexibility and reliability of fully standalone modules, there may be instances where it may be advantageous based on cost, configuration and the like.

Advantageously the described embodiments facilitate the fabrication of an evacuation slide 10 with improved reliability by eliminating many or all of the wires of conventional configurations. This avoids the risk of damage to the wiring typically resultant from the folding and packing of the slide 10. Another feature of the described embodiments is that by making each of the lighting modules 120 independent, and having their own energy generating device, the constant current module and wiring of existing designs is eliminated. Advantageously this approach provides for a significant reliability improvement by eliminating a potential single point failure component in legacy systems.

Another advantage of the described embodiments is that a wireless, standalone configuration eliminates the bonding or taping of the wires to the slide of existing designs. Furthermore, the described embodiments maintain each of the lighting modules 120 independent of the others and, as a result, failure in one device does not impact another lighting module, whereas with conventional designs a wire cut would result in the loss of operation of all lights connected in the circuit supplied by the cut wire. Another advantage of the described embodiments is that the standalone, independent nature of the lighting modules provides for a significant reliability improvement by eliminating cross talk failure in legacy systems that use wired or wireless signals for activating and/or powering the light sources.

Yet another improved technical feature of the described embodiments is that the self-powered wireless lighting system 100 with independent lighting modules means that select lighting modules may be configured to operate differently than other modules if desired. For example dimming, brightness, flashing, strobing, coordinated flashing, even color, and the like. As a result of the independent nature of the standalone lighting modules 120 of the described embodiments, reliability and flexibility of the overall lighting system 100 for the slide 10 is improved. Furthermore, depending on the lighting module 120 and the light source 124 other alternatives are possible.

For example, in an embodiment the light source 124 may configured as multi-color LEDs (Red, Green, Blue) (RGB LEDs). By using such a configuration, different light sources 124 in various lighting modules 120 along the length of the slide 10 can be configured to glow in different colors. For example: in one embodiment, from the top of the slide as attached to the aircraft 12, a first number of light sources 124 e.g., (LEDs) may be configured to glow in a first color, e.g., Green; then further on the slide 10, a second number of light sources 124, e.g., LEDs may be configured to glow in a second color, e.g., blue; and finally, perhaps at the base of the slide 10, some other light sources 124 may be configured to glow in a third color, e.g., red.

Currently only white color light sources are used in aircraft slides. One advantage of the described embodiments is that the lighting modules 120 can be configured in a variety of configurations such as alternating a number of light sources 124 e.g., LEDs, such as 1st, 3rd, 5th ... ) first 5 minutes and then even numbered light sources 124 (such as 2nd, 4th, 6th ... ) will glow later. Furthermore the light sources could be flashing along the length of the slide indicating and illustrating the trajectory path on the slide all while conserving energy to minimize the required size of the sensor 122.

The term "about" is intended to include the degree of error associated with measurement of the particular quantity based upon the equipment available at the time of filing the application.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An aircraft evacuation system for an aircraft, they system comprising:
an evacuation slide (10) disposed in use at an opening in the aircraft, the evacuation slide made of flexible gastight material, and being disposable in each of a stowed configuration and deployed configuration; and **characterized by** further comprising
a self-powered, wireless lighting system (100) that comprises:
lighting modules (120) disposed on the aircraft evacuation slide (10) and spaced apart from each other, wherein the lighting modules (120) operate independently of each other, each of lighting modules (120) including:
a light source (124, 524) configured to provide illumination to the aircraft evacuation slide (10); and
a piezoelectric sensor (122, 422, 522) operably connected to the light source (124, 524) and configured to generate electrical energy based upon a change in fluid pressure inside the evacuation slide (10).

2. The aircraft evacuation system of claim 1, wherein the piezoelectric sensor (122, 422, 522) comprises a diaphragm.

3. The aircraft evacuation system of claim 2, wherein the piezoelectric sensor (122, 422, 522) comprises a fixed portion comprising a metal plate.

4. The aircraft evacuation system of claim 3, wherein the piezoelectric sensor (122, 422, 522) comprises a moveable portion comprising a piezoelectric ceramic disk.

5. The aircraft evacuation system of claim 4, wherein the piezoelectric sensor (122, 422, 522) is configured to generate the electrical energy for the light source (124, 524) in response to the movable portion moving with respect to the fixed portion.

6. The aircraft evacuation system of claim 5, wherein the piezoelectric sensor (122, 422, 522) is configured to generate the electrical energy based upon vibrations of the evacuation slide (10).

7. The aircraft evacuation system of any of claims 1 to 6, further comprising:
a first capacitor configured to store the electrical energy generated by the piezoelectric sensor (122, 422, 522); and
a resistor configured to limit a flow of electrical current between the piezoelectric sensor (122, 422, 522) and the light source (124, 524).

8. The aircraft evacuation system of claim 7, further comprising:
a second capacitor configured to store the electrical energy generated by the piezoelectric sensor (122, 422, 522); and
a diode disposed between the first capacitor and the second capacitor.

9. The aircraft evacuation system of any of claims 1 to 8, wherein the light source (124, 524) comprises a light emitting diode.

10. The aircraft evacuation system of any preceding claim, wherein the self-powered, wireless lighting system (100) further comprises:
a case (126); and
a printed circuit board (128) disposed in the case (126);
wherein the piezoelectric sensor (122, 422, 522) is coupled to the case (126), and the piezoelectric sensor (122, 422, 522) and the light source (124, 524) are disposed on opposite sides of the printed circuit board (128).

11. The aircraft evacuation system of claim 10, wherein the light source (124, 524) is disposed in the case (126).

12. The aircraft evacuation system of claim 10 or 11, wherein the case (126) comprises a transparent material.

13. A method of illuminating an aircraft evacuation slide (10) of an aircraft evacuation system for an aircraft, the method comprising:
disposing lighting modules (120) on the aircraft evacuation slide (10) made of flexible gastight material, and is disposable in each of a stowed configuration and deployed configuration, the lighting modules (120) configured to provide illumination to the aircraft evacuation slide (10), wherein: the lighting modules (120) are spaced apart from each other, wherein the lighting modules (120) operate independently of each other, each of lighting modules (120) including:
a light source (124, 524) configured to provide illumination to the aircraft evacuation slide (10); and
a piezoelectric sensor (122, 422, 522) operably connected to the light source (124, 524) and configured to generate electrical energy based upon a change in fluid pressure inside the evacuation slide (10), wherein the evacuation slide is disposed at an opening in the aircraft.

## Patentansprüche

1. Flugzeugevakuierungssystem für ein Flugzeug, wobei das System umfasst:
eine Evakuierungsrutsche (10), die im Gebrauch an einer Öffnung in dem Flugzeug angeordnet ist, wobei die Evakuierungsrutsche aus flexiblem gasdichtem Material hergestellt ist und in jeder einer verstauten Konfiguration und einer entfalteten Konfiguration anordenbar ist; und **gekennzeichnet durch** ferner umfassend
ein energieautarkes, drahtloses Beleuchtungssystem (100), das umfasst:
Beleuchtungsmodule (120), die an der Flugzeugevakuierungsrutsche (10) angeordnet und voneinander beabstandet sind, wobei die Beleuchtungsmodule (120) unabhängig voneinander arbeiten, wobei jedes der Beleuchtungsmodule (120) beinhaltet:
eine Lichtquelle (124, 524), die konfiguriert ist, um Beleuchtung für die Flugzeugevakuierungsrutsche (10) bereitzustellen; und
einen piezoelektrischen Sensor (122, 422, 522), der wirkverbunden mit der Lichtquelle (124, 524) ist und
konfiguriert ist, um elektrische Energie basierend auf einer Änderung des Fluiddrucks innerhalb der Evakuierungsrutsche (10) zu erzeugen.

2. Flugzeugevakuierungssystem nach Anspruch 1, wobei der piezoelektrische Sensor (122, 422, 522) eine Membran umfasst.

3. Flugzeugevakuierungssystem nach Anspruch 2, wobei der piezoelektrische Sensor (122, 422, 522) einen festen Abschnitt umfasst, der eine Metallplatte umfasst.

4. Flugzeugevakuierungssystem nach Anspruch 3, wobei der piezoelektrische Sensor (122, 422, 522) einen beweglichen Abschnitt umfasst, der eine piezoelektrische Keramikscheibe umfasst.

5. Flugzeugevakuierungssystem nach Anspruch 4, wobei der piezoelektrische Sensor (122, 422, 522) konfiguriert ist, um die elektrische Energie für die Lichtquelle (124, 524) als Reaktion darauf zu erzeugen, dass sich der bewegliche Abschnitt in Bezug auf den festen Abschnitt bewegt.

6. Flugzeugevakuierungssystem nach Anspruch 5, wobei der piezoelektrische Sensor (122, 422, 522) konfiguriert ist, um die elektrische Energie basierend auf Vibrationen der Evakuierungsrutsche (10) zu erzeugen.

7. Flugzeugevakuierungssystem nach einem der Ansprüche 1 bis 6, das ferner umfasst:
einen ersten Kondensator, der konfiguriert ist, um die von dem piezoelektrischen Sensor (122, 422, 522) erzeugte elektrische Energie zu speichern; und
einen Widerstand, der konfiguriert ist, um einen Fluss von elektrischem Strom zwischen dem piezoelektrischen Sensor (122, 422, 522) und der Lichtquelle (124, 524) zu begrenzen.

8. Flugzeugevakuierungssystem nach Anspruch 7, das ferner umfasst:
einen zweiten Kondensator, der konfiguriert ist, um die von dem piezoelektrischen Sensor (122, 422, 522) erzeugte elektrische Energie zu speichern; und
eine Diode, die zwischen dem ersten Kondensator und dem zweiten Kondensator angeordnet ist.

9. Flugzeugevakuierungssystem nach einem der Ansprüche 1 bis 8, wobei die Lichtquelle (124, 524) eine Leuchtdiode umfasst.

10. Flugzeugevakuierungssystem nach einem der vorhergehenden Ansprüche, wobei das energieautarke, drahtlose Beleuchtungssystem (100) ferner umfasst:
ein Gehäuse (126); und
eine Leiterplatte (128), die in dem Gehäuse (126) angeordnet ist;
wobei der piezoelektrische Sensor (122, 422, 522) mit dem Gehäuse (126) gekoppelt ist und der piezoelektrische Sensor (122, 422, 522) und die Lichtquelle (124, 524) auf entgegengesetzten Seiten der Leiterplatte (128) angeordnet sind.

11. Flugzeugevakuierungssystem nach Anspruch 10, wobei die Lichtquelle (124, 524) in dem Gehäuse (126) angeordnet ist.

12. Flugzeugevakuierungssystem nach Anspruch 10 oder 11, wobei das Gehäuse (126) ein transparentes Material umfasst.

13. Verfahren zum Beleuchten einer Flugzeugevakuierungsrutsche (10) eines Flugzeugevakuierungssystems für ein Flugzeug, wobei das Verfahren umfasst:
Anordnen von Beleuchtungsmodulen (120) an der Flugzeugevakuierungsrutsche (10), die aus flexiblem gasdichtem Material hergestellt ist und in jeder einer verstauten Konfiguration und einer entfalteten Konfiguration anordenbar ist, wobei die Beleuchtungsmodule (120) konfiguriert sind, um Beleuchtung für die Flugzeugevakuierungsrutsche (10) bereitzustellen, wobei: die Beleuchtungsmodule (120) voneinander beabstandet sind, wobei die Beleuchtungsmodule (120) unabhängig voneinander arbeiten, wobei jedes der Beleuchtungsmodule (120) beinhaltet:
eine Lichtquelle (124, 524), die konfiguriert ist, um Beleuchtung für die Flugzeugevakuierungsrutsche (10) bereitzustellen; und
einen piezoelektrischen Sensor (122, 422, 522), der wirkverbunden mit der Lichtquelle (124, 524) ist und
konfiguriert ist, um elektrische Energie basierend auf einer Änderung des Fluiddrucks innerhalb der Evakuierungsrutsche (10) zu erzeugen, wobei die Evakuierungsrutsche an einer Öffnung in dem Flugzeug angeordnet ist.

## Revendications

1. Système d'évacuation d'aéronef pour un aéronef, le système comprenant :
un toboggan d'évacuation (10) disposé en cours d'utilisation au niveau d'une ouverture dans l'aéronef, le toboggan d'évacuation étant constitué d'un matériau souple et étanche aux gaz, et
pouvant être disposé dans chacune d'une configuration repliée et d'une configuration déployée ; et **caractérisé en ce qu'**il comprend également
un système d'éclairage sans fil et auto-alimenté (100) qui comprend :
des modules d'éclairage (120) disposés sur le toboggan d'évacuation d'aéronef (10) et espacés les uns des autres, dans lequel les modules d'éclairage (120) fonctionnent indépendamment les uns des autres, chaque module d'éclairage (120) comportant :
une source lumineuse (124, 524) configurée pour fournir un éclairage au toboggan d'évacuation d'aéronef (10) ; et
un capteur piézoélectrique (122, 422, 522) connecté de manière fonctionnelle à la source lumineuse (124, 524) et configuré pour générer de l'énergie électrique sur la base d'un changement de pression du fluide à l'intérieur du toboggan d'évacuation (10).

2. Système d'évacuation d'aéronef selon la revendication 1, dans lequel le capteur piézoélectrique (122, 422, 522) comprend un diaphragme.

3. Système d'évacuation d'aéronef selon la revendication 2, dans lequel le capteur piézoélectrique (122, 422, 522) comprend une partie fixe comprenant une plaque métallique.

4. Système d'évacuation d'aéronef selon la revendication 3, dans lequel le capteur piézoélectrique (122, 422, 522) comprend une partie mobile comprenant un disque en céramique piézoélectrique.

5. Système d'évacuation d'aéronef selon la revendication 4, dans lequel le capteur piézoélectrique (122, 422, 522) est configuré pour générer l'énergie électrique de la source lumineuse (124, 524) en réponse au déplacement de la partie mobile par rapport à la partie fixe.

6. Système d'évacuation d'aéronef selon la revendication 5, dans lequel le capteur piézoélectrique (122, 422, 522) est configuré pour générer l'énergie électrique sur la base des vibrations du toboggan d'évacuation (10).

7. Système d'évacuation d'aéronef selon l'une quelconque des revendications 1 à 6, comprenant également :
un premier condensateur configuré pour stocker l'énergie électrique générée par le capteur piézoélectrique (122, 422, 522) ; et
une résistance configurée pour limiter un flux de courant électrique entre le capteur piézoélectrique (122, 422, 522) et la source lumineuse (124, 524).

8. Système d'évacuation d'aéronef selon la revendication 7, comprenant également :
un second condensateur configuré pour stocker l'énergie électrique générée par le capteur piézoélectrique (122, 422, 522) ; et
une diode disposée entre le premier condensateur et le second condensateur.

9. Système d'évacuation d'aéronef selon l'une quelconque des revendications 1 à 8, dans lequel la source lumineuse (124, 524) comprend une diode électroluminescente.

10. Système d'évacuation d'aéronef selon une quelconque revendication précédente, dans lequel le système d'éclairage sans fil auto-alimenté (100) comprend en outre :
un boîtier (126) ; et
une carte de circuit imprimé (128) disposée dans le boîtier (126) ;
dans lequel le capteur piézoélectrique (122, 422, 522) est couplé au boîtier (126), et le capteur piézoélectrique (122, 422, 522) et la source lumineuse (124, 524) sont disposés sur des côtés opposés de la carte de circuit imprimé (128).

11. Système d'évacuation d'aéronef selon la revendication 10, dans lequel la source lumineuse (124, 524) est disposée dans le boîtier (126).

12. Système d'évacuation d'aéronef selon la revendication 10 ou 11, dans lequel le boîtier (126) comprend un matériau transparent.

13. Procédé d'éclairage d'un toboggan d'évacuation d'aéronef (10) d'un système d'évacuation d'aéronef pour un aéronef, le procédé comprenant :
la disposition de modules d'éclairage (120) sur le toboggan d'évacuation d'aéronef (10) fabriqué en matériau souple étanche aux gaz, et pouvant être disposé dans chacune d'une configuration repliée et d'une configuration déployée, les modules d'éclairage (120) étant configurés pour fournir un éclairage au toboggan d'évacuation d'aéronef (10) dans lequel :
les modules d'éclairage (120) sont espacés les uns des autres, dans lequel les modules d'éclairage (120) fonctionnent indépendamment les uns des autres, chacun des modules d'éclairage (120) comportant :
une source lumineuse (124, 524) configurée pour fournir un éclairage au toboggan d'évacuation d'aéronef (10) ; et
un capteur piézoélectrique (122, 422, 522) connecté de manière fonctionnelle à la source lumineuse (124, 524) et configuré pour générer de l'énergie électrique en fonction d'un changement de pression du fluide à l'intérieur du toboggan d'évacuation (10),
dans lequel le toboggan d'évacuation est disposé au niveau d'une ouverture dans l'aéronef.
